Europäisches Patentamt

European Patent Office

Office européen des brevets

(19)

(11) Veröffentlichungsnummer: **0 298 432 B1**

(12) # EUROPÄISCHE PATENTSCHRIFT

(45) Veröffentlichungstag der Patentschrift: **04.03.92**

(51) Int. Cl.⁵: **C08F 10/02**, C08F 4/00

(21) Anmeldenummer: **88110734.6**

(22) Anmeldetag: **05.07.88**

(54) **Verfahren zur Herstellung von Polyethylenen.**

(30) Priorität: **09.07.87 DE 3722737**

(43) Veröffentlichungstag der Anmeldung:
**11.01.89 Patentblatt 89/02**

(45) Bekanntmachung des Hinweises auf die
Patenterteilung:
**04.03.92 Patentblatt 92/10**

(84) Benannte Vertragsstaaten:
**BE DE ES FR GB IT NL**

(56) Entgegenhaltungen:
**EP-A- 0 002 764**
**EP-A- 0 003 735**

(73) Patentinhaber: **Peroxid-Chemie GmbH**
**Dr.-Gustav-Adolph-Strasse 2**
**W-8023 Höllriegelskreuth bei München(DE)**

(72) Erfinder: **Luft, Gerhard, Prof. Dr.**
**Ludwigstrasse 141 A**
**W-6109 Mühltal(DE)**
Erfinder: **Dorn, Maximilian, Dr.**
**Gistlstrasse 100 A**
**W-8023 Pullach(DE)**
Erfinder: **Fischer, Norbert, Dipl.-Ing.**
**Bahnhofstrasse 46**
**W-6101 Rossdorf(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08**
**20**
**W-8000 München 86(DE)**

**Beschreibung**

Die Erfindung betrifft ein Verfahren zur Herstellung von Polyethylenen unter Verwendung eines Diphenylethanderivats als C-C-labilem Polymerisationsinitiator.

Verfahren zur Polymerisation von Ethylen unter erhöhtem Druck und erhöhter Temperatur sind in einer Reihe von Varianten bekannt. Zur Initiierung der Polymerisationsreaktion werden dem Ethylen radikalspendende Stoffe wie organische Peroxide, Sauerstoff oder andere Radikalbildner zugesetzt.

So beschreibt die US-PS 3,896,099 ein Verfahren zur Polymerisation von ethylenisch ungesättigten Monomeren, bei dem die Polymerisation durch freie Radikale initiiert wird, wobei als Initiator ein 1,1,2,2-Tetracarboalkoxydiarylethan verwendet wird. Diese Verbindung muß in einer Menge von 0,01 bis 5 % gegenüber den Reaktanten eingesetzt werden. Die Reaktionstemperatur liegt bei diesem Verfahren zwischen 40 und 200 ° C, die Dauer einer 50%igen Umsetzung beträgt etwa 30 Minuten. Die Nachteile dieses Verfahrens liegen darin, daß eine große Menge Initiator eingesetzt werden muß und die erforderliche Reaktionszeit für eine großtechnische Herstellung zu lange ist.

Die DE-OS 24 44 252 beschreibt ein Verfahren zur Ausführung von chemischen Reaktionen, die durch Radikale initiiert werden, wobei als radikalische Initiatoren 1,2-Diaryl-1,2-dicyano-1,2-dihalogenethan-Verbindungen verwendet werden. Die Reaktionstemperatur beträgt bei diesem Verfahren zwischen 40 und 200 ° C und auch hierbei ist es nötig, die radikalischen Initiatoren in Mengen von 0,01 bis 3 Gew.-% der umzusetzenden Verbindungen, also in relativ großen Mengen zuzusetzen. Bei diesem Verfahren ist ebenfalls die Reaktionszeit sehr lange, nämlich abhängig vom eingesetzten Initiator für eine 50%ige Umsetzung zwischen 4 und 6 Stunden.

Die US-PS 3,066,115 beschreibt ein Verfahren zur Polymerisation von ungesättigten, eine ethylenische Bindung enthaltenden Verbindungen, wobei als Radikal bildender Initiator mindestens 0,001 Gew.-% einer Diphenylethanverbindung eingesetzt werden, bevorzugt ($\alpha$-Methyl-$\alpha$-ethyl-$\beta$-methyl-$\beta$-ethyl)-diphenylethan. Die Temperatur wird bei diesem Verfahren in verschiedenen Stadien variiert, liegt aber insgesamt zwischen 125 und 250 ° C, die Reaktionszeiten insgesamt im Bereich von Stunden bis Tagen.

Weiterhin ist es zwar bekannt, daß bei der Polymerisation bei steigender Temperatur auch die Ausbeute zunimmt, dabei ergeben sich aber mit den üblicherweise verwendeten Initiatoren bei hohen Temperaturen Produktverfärbungen, die die Verwendbarkeit des Produktes stark einschränken. Bei der Anwendung von hohen Temperaturen und Drücken tritt außerdem eine Zersetzung des Ethylens in Kohlenstoff und Methan ein. Dieses Problem tritt besonders bei Temperaturen oberhalb von 300 ° C auf. Die Methanbildung ist dabei besonders kritisch, da sie zu starken Überdrücken führen kann, die Explosionen hervorrufen und zumindest die Überdruckventile der Autoklaven, in denen die Reaktion abläuft, aufblasen. Diese unerwünschte Zersetzungsreaktion ist außerdem stark exotherm, was zur Gefährlichkeit der Anwendung hoher Temperaturen bei der Polymerisation beträgt.

Eine weitere unerwünschte Reaktion, die bei hohen Temperaturen stattfinden kann, ist eine Zersetzung des Polymerisationsinitiators, der dadurch seine Wirksamkeit zur Initiierung der Polymerisationsreaktion verliert.

Aufgabe der vorliegenden Erfindung war es daher, die genannten Nachteile des Standes der Technik zu vermeiden und ein Verfahren zur Herstellung von Polyethylenen bereitzustellen, das bei niedrigem Initiatorverbrauch nur kurze Polymerisationszeiten benötigt, zu hohen Ausbeuten an reinweißem Polymerisationsprodukt führt, und eine möglicherweise gefährliche Zersetzung des Ethylens oder des Polymerisationsinitiators verhindert.

Diese Aufgabe wird erfindungsgemäß gelöst durch ein Verfahren zur Herstellung von Polyethylen unter Verwendung eines Diphenylethan-Derivats als C-C-labilem Polymerisationsinitiator, welches dadurch gekennzeichnet ist, daß man mit 1 bis 40 Mol 3,4-Dimethyl-3,4-diphenylhexan, bezogen auf 1 Mio. Mol eingesetztes Ethylen, bei 260 bis 400 ° C und 60.000 bis 350.000 kPa Druck polymerisiert.

Durch dieses Verfahren ist es möglich, bei äußerst kurzen Verweilzeiten des Reaktionsgemisches im Reaktor besonders hohe Ausbeuten an Polyethylen zu erhalten, das die übliche weiße Farbe besitzt und keine Verfärbungen aufweist. Erfindungsgemäß hergestelltes Polyethylen besitzt eine niedrige bis mittlere Dichte (0,85 bis 0,935 g cm$^{-3}$) und einen hohen Schmelzindex. Weiterhin ist der Verbrauch des Initiators im erfindungsgemäßen Verfahren äußerst niedrig und es findet keine Zersetzung des Ethylens statt.

In einer bevorzugten Ausführungsform der Erfindung polymerisiert man mit 2 bis 10 Mol 3,4-Dimethyl-3,4-diphenylhexan, bezogen auf 1 Mio. Mol eingesetztes Ethylen. In einer weiteren bevorzugten Ausführungsform wird bei einer Temperatur von 300 bis 360 ° C polymerisiert. Weiterhin wird bevorzugt bei einem Druck von 150.000 bis 200.000 kPa polymerisiert.

Zur Durchführung des erfindungsgemäßen Verfahrens eignen sich die für die Polymerisation von Ethylen unter erhöhtem Druck und erhöhter Temperatur üblicherweise angewandten Vorrichtungen und Verfahrensweisen, wie sie z. B. in "Ullmanns Enzyklopädie der technischen Chemie, Band 19, 4. Auflage, Seiten 167 bis 226, Verlag Chemie, dito Band 3, 4. Auflage, Seiten 321 bis 326 oder Chem.-Ing.-Techn. 51 (1969) Seiten 960 bis 969, beschrieben sind.

In einer bevorzugten Ausgestaltung der Erfindung wird die Polymerisation in einem Rührautoklaven durchgeführt, bei dem die Temperatur des eintretenden Ethylens über einen Wärmeaustauscher reguliert wird.

Die Verweilzeit des Reaktionsgemisches im Reaktor beträgt bevorzugt 10 Sekunden bis 120 Sekunden, besonders bevorzugt 20 bis 60 Sekunden. Diese kurze Verweilzeit im Reaktor ist ein großer Vorteil der Erfindung. Sie führt bei entsprechender Anlagengröße zu einer verbesserten Ausnutzung der Anlagen und bei gegebener Anlagengröße damit zu einer erhöhten Produktion. Die Trennung von Polymerisat und nicht umgesetztem Ethylen erfolgt in einer bevorzugten Ausführungsform der Erfindung durch Druckentspannung hinter dem Reaktor.

Erfindungsgemäß hergestellte Polyethylene konnen für alle bekannten und denkbaren Verwendungszwecke von Polyethylen eingesetzt werden und können aufgrund des hohen Schmelzindexes und des relativ niedrigen Molekulargewichts insbesondere auch als Fließverbesserer, Polyethylenwachs oder als inneres Schmiermittel für Thermoplaste verwendet werden. Derartige Polyethylene mit niedrigem Molekulargewicht bzw. hohem Schmelzindex konnten bisher nur durch Anwendung niedriger Drücke und damit hoher Initiatormengen hergestellt werden.

Die folgenden Beispiele sollen die Erfindung weiter erläutern.

## Beispiel 1

Dem Reaktor wird kontinuierlich ein auf 170.000 kPa komprimiertes Gemisch aus 1.000.000 Gewichtsteilen Ethylen/Stunde und 95 Gewichtsteilen 3,4-Dimethyl-3,4-diphenylhexan (CCDFH)/Stunde (entsprechend 10 Mol, bezogen auf 1 Mio. Mol Ethylen) mit einer Temperatur von 20 °C zugeführt. Bei einer Verweilzeit von 30 sec. und einer auf 235 °C konstant gehaltenen Temperatur des Reaktormantels erreicht das Reaktionsgemisch durch die freiwerdende Reaktionswärme eine Temperatur von 358 °C. Die sonstigen Bedingungen sind in Tabelle 1 aufgeführt. Auf diese Weise werden bei stabilem Reaktorverhalten 587.000 Gewichtsteile/Stunde eines Polyethylens erhalten, das die übliche weiße Farbe besitzt und keine Verfärbungen aufweist. Es hat nach DIN 53 479 eine Dichte von 0,8890 g/cm$^3$ und einen Schmelzindex von 11.300g/10min nach DIN 53 735 bei 125 °C mit 0,325 kp gemessen. Es resultiert ein niedriger Initiatorverbrauch von 0,16 g Initiator je kg gebildetes Polyethylen.

## Beispiel 2

Dem Reaktor wird kontinuierlich ein auf 170000 kPa komprimiertes Gemisch aus 1.000.000 Gewichtsteilen Ethylen/Stunde auf 76 Gewichtsteilen 3,4-Dimethyl-3,4-diphenylhexan (CCDFH)/Stunde (entsprechend 8 Mol, bezogen auf 1 Mio. Mol Ethylen) mit einer Temperatur von 20 °C zugeführt. Bei einer Verweilzeit von 30 sec. und einer auf 240 °C konstant gehaltenen Temperatur des Reaktormantels erreicht das Reaktionsgemisch durch die freiwerdende Reaktionswärme eine Temperatur von 340 °C. Auf diese Weise werden 489.000 Gewichtsteile/Stunde eines Polyethylens erhalten, das die übliche weiße Farbe besitzt und keine Verfärbungen aufweist. Es hat nach DIN 53 479 eine Dichte von 0,8930 g/cm$^3$ und einen Schmelzindex von 5.200 g/10 min nach DIN 53 735 bei 125 °C mit 0,325 kp gemessen. Der Initiatorverbrauch beträgt 0,16 g Initiator je kg Polyethylen.

Vergleichsbeispiel 1A

In dem Eingang des gleichen Reaktors wird ein auf nur 110000 kPa komprimiertes Gemisch aus 1.000.000 Gewichtseinheiten Ethylen/Stunde und 1387,5 Gewichtsteilen t-Butyl-per-2-ethylhexanoat (TBPEH)/Stunde (entsprechend 180 Mol, bezogen auf 1 Mio. Mol Ethylen) kontinuierlich eingespeist. Bei einer Polymerisationstemperatur von 230 °C hat das gebildete Polyethylen eine Dichte von 0,9200 g/ml und einen Schmelzindex von 54,7 g/10 min nach DIN 53 735 bei 190 °C mit 2,16 kp gemessen. Es wird nur eine Polymermenge von 152.000 Gewichtsteilen erhalten. Je Kilogramm gebildetes Polymeres müssen 9,1 g Initiator eindosiert werden.

Vergleichsbeispiel 2A

Es wird genauso verfahren wie im Vergleichsbeispiel 1A, jedoch werden 652 Gewichtsteile t-Butylperpivalat (TBPPI)/Stunde (entsprechend 105 Mol, bezogen auf 1 Mio Mol Ethylen) eingesetzt und der Druck auf 90000 kPa abgesenkt. Bei gleicher Polymerisationstemperatur von 230°C werden 70.000 Gewichtsteile eines Polyethylens mit einer Dichte von 0,9150 g/ml und einem Schmelzindex von 21,6 g/10 Minuten, gemessen nach DIN 53 735 bei 190°C mit 2,16 kp erhalten. Der Initiatorverbrauch beträgt 9,3 g Initiator je kg gebildetes Polyethylen.

Vergleichsbeispiel 3A

Es wird genauso verfahren wie im Vergleichsbeispiel IA, jedoch werden 32 Gewichtsteile t-Butylhydroperoxid (TBHP)/Stunde (entsprechend 10 Mol, bezogen auf 1 Mio Mol Ethylen) eingesetzt und der Druck auf 170000 kPa belassen. Bei einer Polymerisationstemperatur von 287°C werden 343.000 Gewichtsteile eines Polyethylens mit einer Dichte von 0,9065 g/ml und einem Schmelzindex von 480 g/10 Minuten, nach DIN 53 735 bei 190°C mit 2,16 kp gemessen, erhalten. Je Kilogramm gebildetes Polymeres werden 0,1 g des Initiators eingesetzt. Das Polymere zeigt zum Teil bräunliche Verfärbungen.

Tabelle 1

| Beispiel | 1 | 2 |
|---|---|---|
| Initiator | CCDFH | CCDFH |
| Initiatorkonzentration im Eingang (mol ppm) | 10 | 8 |
| Druck (kPa) | 170000 | 170000 |
| Reaktortemperatur (°C) | 358 | 340 |
| Reaktormanteltemperatur (°C) | 235 | 240 |
| Ausbeute an Polyethylen (%) | 58,7 | 48,9 |
| Initiatorverbrauch (g I/kg PE) | 0,16 | 0,16 |
| Schmelzindex (g/10 min) | 11.300 | 5.200 |
| Dichte (g/ml) | 0,8890 | 0,8930 |

Tabelle 2

| Vergleichsbeispiel | 1A | 2A | 3A[1] |
|---|---|---|---|
| Initiator | TBPEH | TBPPI | TBHP |
| Initiatorkonzentration im Eingang (mol ppm) | 180 | 105 | 10 |
| Druck (kPa) | 110000 | 90000 | 170000 |
| Reaktortemperatur (°C) | 230 | 230 | 87 |
| Reaktormanteltemperatur (°C) | 180 | 200 | 170 |
| Ausbeute an Polyethylen (%) | 15,2 | 7,0 | 34,3 |
| Initiatorverbrauch (g I/kg PE) | 9,1 | 9,3 | 0,1 |
| Schmelzindex (g/10 min) | 54,7 | 21,6 | 480 |
| Dichte (g/ml) | 0,9200 | 0,9150 | 0,9065 |

[1] unter Zusatz von 4 Gew.-% Buten 1

**Patentansprüche**

1. Verfahren zur Herstellung von Polyethylenen unter Verwendung eines Diphenylethan-Derivats als C-C-labilen Polymerisationsinitiator, **dadurch gekennzeichnet,** daß man mit 1 bis 40 Mol 3,4-Dimethyl-3,4-diphenylhexan, bezogen auf 1 Mio. Mol eingesetztes Ethylen, bei 260 bis 400°C und 60.000 bis 350.000 kPa Druck polymerisiert.

2. Verfahren nach Anspruch 1, **dadurch gekennzeichnet,** daß man mit 5 bis 10 Mol 3,4-Dimethyl-3,4-diphenylhexan polymerisiert.

3. Verfahren nach Anspruch 1 oder 2, **dadurch gekennzeichnet,** daß man bei 300 bis 360°C polymerisiert.

**4.** Verfahren nach Anspruch 1 bis 3, **dadurch gekennzeichnet,** daß man bei einem Druck von 150.000 bis 200.000 kPa polymerisiert.

**5.** Verfahren nach Anspruch 1 bis 4, **dadurch gekennzeichnet,** daß die Polymerisation in einem Rührautoklaven oder Rohrreaktor durchgeführt wird, bei dem die Temperatur des eintretenden Ethylens über einen Wärmeaustauscher reguliert wird.

**6.** Verfahren nach Anspruch 1 bis 6, **dadurch gekennzeichnet,** daß die Verweilzeit des Reaktionsgemisches im Reaktor 10 sec. bis 120 sec. beträgt.

**7.** Verfahren nach Anspruch 6, **dadurch gekennzeichnet,** daß die Verweilzeit des Reaktionsgemisches im Reaktor 20 bis 60 sec. beträgt.

**8.** Verfahren nach Anspruch 1 bis 7, **dadurch gekennzeichnet,** daß die Trennung von Polymerisat und nicht umgesetztem Ethylen durch Druckentspannung hinter dem Reaktor erfolgt.

**Claims**

**1.** Process for the production of polyethylenes with the use of a diphenyl-ethane derivative as C-C labile polymerisation initiator, characterised in that one polymerises with 1 to 40 mole 3,4-dimethyl-3,4-diphenylhexane, referred to 1 million mole of ethylene used, at 260 to 400°C and 60,000 to 350,000 kPa pressure.

**2.** Process according to claim 1, characterised in that one polymerises with 5 to 10 mole 3,4-dimethyl-3,4-diphenylhexane.

**3.** Process according to claim 1 or 2, characterised in that one polymerises at 300 to 360°C.

**4.** Process according to claim 1 to 3, characterised in that one polymerises at a pressure of 150,000 to 200,000 kPa.

**5.** Process according to claim 1 to 4, characterised in that the polymerisation is carried out in a stirrer autoclave or tubular reactor in which the temperature of the inflowing ethylene is regulated by means of a heat exchanger.

**6.** Process according to claim 1 to 5, characterised in that the residence time of the reaction mixture in the reactor amounts to 10 sec. to 120 sec.

**7.** Process according to claim 6, characterised in that the residence time of the reaction mixture in the reactor amounts to 20 to 60 sec.

**8.** Process according to claim 1 to 7, characterised in that the separation of polymer and unreacted ethylene takes place by release of pressure behind the reactor.

**Revendications**

**1.** Procédé de préparation de polyéthylènes utilisant un dérivé de diphényléthane en tant qu'amorceur de polymérisation à C-C-labile, caractérisé en ce qu'on polymérise avec 1 à 40 moles de 3,4-diméthyl-3,4-diphénylhexane, rapportées à 1 million de moles d'éthylène mis en oeuvre, entre 260 et 400°C et sous une pression de 60.000 à 350.000 kPa.

**2.** Procédé selon la revendication 1, caractérisé en ce qu'on polymérise avec 5 à 10 moles de 3,4-diméthyl-3,4-diphénylhexane.

**3.** Procédé selon la revendication 1 ou 2, caractérisé en ce qu'on polymérise entre 300 et 360°C.

4.  Procédé selon les revendications 1 à 3, caractérisé en ce qu'on polymérise sous une pression de 150.000 à 200.000 kPa.

5.  Procédé selon les revendications 1 à 4, caractérisé en ce que la polymérisation est conduite dans un autoclave à agitation ou dans un réacteur tubulaire dans lequel la température de l'éthylène entrant est régulée par l'intermédiaire d'un échangeur de température.

6.  Procédé selon les revendications 1 à 5, caractérisé en ce que le temps de séjour du mélange réactionnel dans le réacteur se situe entre 10 s et 120 s.

7.  Procédé selon la revendication 6, caractérisé en ce que le temps de séjour du mélange réactionnel dans le réacteur se situe entre 20 et 60 s.

8.  Procédé selon les revendications 1 à 7, caractérisé en ce que la séparation du polymérisat et de l'éthylène non transformé s'opère par détente après le réacteur.